# EUROPÄISCHE PATENTSCHRIFT

(11) **EP 1 128 058 B1**
(45) Veröffentlichungstag und Bekanntmachung des Hinweises auf die Patenterteilung: **09.12.2009**
(21) Anmeldenummer: 01104709.9
(22) Anmeldetag: 26.02.2001
(51) Int. Cl.: F02M 37/22

(54) **Filtereinrichtung für Dieselkraftstoff eines Kraftfahrzeug-Verbrennungsmotors**
Diesel fuel filter of a vehicle engine
Filtre de gazole d'un moteur à combustion de véhicule

(30) Priorität: 28.02.2000 DE 10009469; 13.05.2000 DE 10023649
(43) Veröffentlichungstag der Anmeldung: 29.08.2001
(60) Teilanmeldung: 09166288.2
(73) Patentinhaber: MAHLE Filtersysteme GmbH, 70376 Stuttgart (DE)
(72) Erfinder: Hönemann, Erik, 80809 München (DE); Lang, Wolfgang, 73262 Reichenbach (DE); Ruppel, Stefan, 68163 Mannheim (DE); Schick, Albert, 74336 Brackenheim (DE); Stange, Jörg, 70567 Stuttgart (DE)
(74) Vertreter: Bongen, Renaud & Partner

(56) Entgegenhaltungen:
- EP-A- 0 451 945
- EP-A- 0 631 044
- DE-A- 3 632 655
- US-A- 5 887 572
- PATENT ABSTRACTS OF JAPAN vol. 008, no. 154 (M-310), 18. Juli 1984 (1984-07-18) & JP 59 051154 A (TOYOTA JIDOSHA KK), 24. März 1984 (1984-03-24)
- PATENT ABSTRACTS OF JAPAN vol. 008, no. 227 (M-332), 18. Oktober 1984 (1984-10-18) & JP 59 108859 A (ISUZU JIDOSHA KK), 23. Juni 1984 (1984-06-23)
- PATENT ABSTRACTS OF JAPAN vol. 008, no. 227 (M-332), 18. Oktober 1984 (1984-10-18) & JP 59 108860 A (ISUZU JIDOSHA KK), 23. Juni 1984 (1984-06-23)

## Beschreibung

Die Erfindung betrifft eine Dieselkraftstoff-Filtereinrichtung sowie vorteilhafte Ausgestaltungen einer solchen Filtereinrichtung nach entsprechenden Unteransprüchen.

Aus der DE 36 32 655 A1 ist eine gattungsgemäße Filtereinrichtung für Dieselkraftstoff mit einem bei Erreichen eines bestimmten Differenzdruckes zwischen dem Ein- und dem Auslass des Filters öffnenden Ventil in einem Bypass für den Dieselkraftstoff bekannt. Bei Überschreitung einer bestimmten Temperatur verschließt ein Ausdehnungskörper den Bypass, wobei sich dieser einseitig an einem Teil eines Filterdeckels abstützt und an seinem anderen Ende eine dichtend in einem Teil des den Bypass bildenden Kanals bewegliche Hülse trägt.

Aus der JP 59 05 11 54 A sowie aus der JP 59 108 859 A sind weitere Filtereinrichtungen bekannt.

Bei der gattungsgemäßen Dieselkraftstoff-Filtereinrichtung beschäftigt sich die Erfindung mit dem Problem, einerseits eine temperaturunabhängig arbeitende Filterverschmutzungs-Wartungsanzeige zu schaffen und andererseits weitestgehend mit den hierfür einzusetzenden Mitteln den Aktivbetrieb einer vorhandenen Heizvorrichtung auf ein für einen ungestörten Motorbetrieb unbedingt erforderliches Maß zu minimieren.

Grundsätzlich gelöst wird dieses Problem durch die Ausgestaltungen nach den kennzeichnenden Merkmalen der Patentansprüche 1-15.

Bezüglich der temperaturunabhängigen Filter-Wartungsanzeige beruht die betreffende Lösung auf dem Gedanken, nur solche Druckerhöhungen innerhalb des Kraftstoffes als Hinweis auf eine unzulässige Verschmutzung des Filters anzusehen, die oberhalb eines unteren Temperaturbereiches des Kraftstoffes, in dem temperaturbedingt Feststoff-Ausscheidungen anfallen können, auftreten. Denn nur dann kann Sicherheit darüber bestehen, daß die Druckerhöhung innerhalb des Kraftstoffes auf einer echten, dauerhaften Filterverschmutzung und nicht auf einer lediglich bei niedrigen Temperaturen ausfallenden, sich bei normaler Motorbetriebstemperatur wieder auflösenden Feststoffteilchen beruht.

Mit Bezug auf eine vorhandene Heizvorrichtung beruht die Lösung auf dem Gedanken, Heizenergie nur dann einzusetzen, wenn bedingt durch niedrige Kraftstofftemperaturen tatsächlich in dem Filter ein für einen einwandfreien Motorbetrieb zu hoher Strömungswiderstand auftritt. Ein solch zulässig hoher Strömungswiderstand ist nicht allein von der Temperatur des Kraftstoffes abhängig, sondern auch von dessen Konsistenz sowie dem Betriebszustand des Filters. So wird beispielsweise bei einem Filter, das sich bereits im oberen Bereich eines zulässigen Verschmutzungszustandes befindet, in der Regel bereits bei höheren Kraftstofftemperaturen ein unzulässig hoher Strömungsverlust auftreten können als bei einem Filter im Neuzustand. Weiterhin wird von Bedeutung sein, welche paraffinausfallhemmenden Zusatzstoffe einem Dieselkraftstoff zugegeben sind, das heißt die Zusammensetzung des Dieselkraftstoffes wird ebenfalls einen temperaturunabhängigen Einfluss auf die bei niedrigen Temperaturen auftretenden Strömungswiderstände in dem Filter ausüben. Damit ist es wichtig, daß Heizenergie nicht ausschließlich in Abhängigkeit des Temperaturzustandes des Dieselkraftstoffes eingesetzt wird, sondern tatsächlich in Abhängigkeit des sich in einem vorgegebenen niedrigen Temperaturbereich jeweils aktuell einstellenden Strömungswiderstandes innerhalb des Filters.

Ein besonderer Vorteil der erfindungsgemäßen Filtereinrichtung besteht darin, die für die Anzeige eines Filterverschmutzungs-Wartungssignals bei einem für einen einwandfreien Motorbetrieb unzulässig hoch verschmutzten Filter notwendigen Einrichtungen, Messungen und Auswertungen zusätzlich auch noch für die Aktivierung der Heizleistung nutzen zu können. Dieser Vorteil ergibt sich ganz einfach daraus, dass erst bei einem oberhalb eines vorgegebenen niedrigen Temperaturbereiches, in dem bei einem Dieselkraftstoff insbesondere Paraffinausscheidungen erfolgen können, ein unzulässig hoher Strömungswiderstand innerhalb des Filters ausschließlich auf einer Verschmutzung des Filters beruhen kann.

Ausführungsbeispiele der Erfindung sind in der Zeichnung dargestellt.

In dieser zeigen
- Fig. 1: ein Schaltbild für die Erwärmung eines Dieselkraftstoffes,
- Fig. 2: ein Schaltbild für ein erfindungsgemäßes Verfahren bei Anwendung einer aus einem Haupt- und einem pa- rallel geschalteten Zusatzfilter bestehenden Fil- tereinrichtung,
- Fig. 3: einen Längsschnitt durch eine erfindungsgemäße Filtereinrichtung mit einem Haupt- und einem Zusatzfilter,
- Fig. 4: eine Kombination aus einem im Längsschnitt darge- stellten Kraftstofffilter und einem über eine Steckverbindung angebundenen - nicht geschnittenen - Heizmodul.

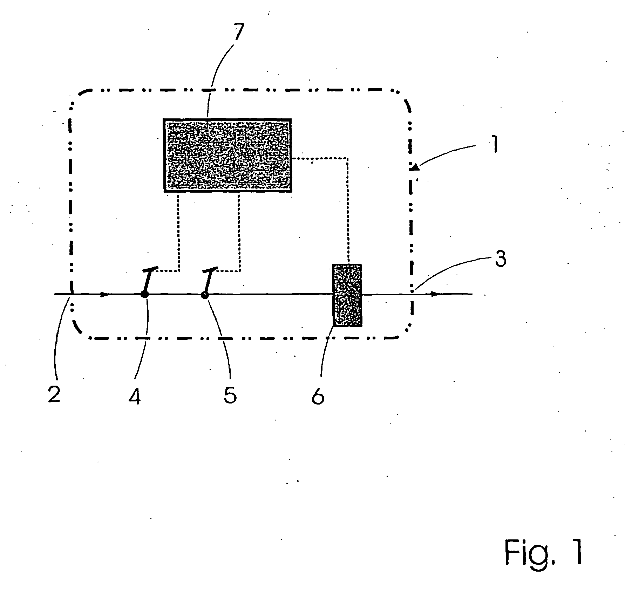

Bei dem Schaltbild nach Fig. 1 ist der Umriß einer für die Erwärmung eines Dieselkraftstoffes vorgesehenen Einrichtung 1 strichpunktiert dargestellt. An dieser Umrißlinie ist die Lage eines in diese Einrichtung Dieselkraftstoff einleitenden Stutzens 2 sowie eines in ein nachgeschaltetes - in dieser Figur nicht dargestelltes - Kraftstofffilter führenden Zulaufstutzens 3 angedeutet. Innerhalb des Steuerschaltbildes nach Fig. 1 sind weiterhin bezeichnet mit 4 ein die Temperatur des Kraftstoffes erfassender Temperaturfühler, mit 5 ein den Druck des Kraftstoffes erfassender Drucksensor, eine elektrische Heizvorrichtung 6 zur Erwärmung des Kraftstoffes sowie eine mit den Elementen 4 bis 6 jeweils elektrisch verbundene Elektronikeinrichtung 7.

Unter Einsatz der vorgenannten Steuer- und Auswerteelemente kann eine Heizung zur Aufwärmung des Diesel-Kraftstoffes in einer Filtereinrichtung wie folgt gesteuert werden.

Bei einem oberhalb eines vorgegebenen Grenzwertes liegenden Druckwert (erfaßt durch den Drucksensor 5) wird bei einer unterhalb eines vorgegebenen Grenzwertes liegenden Temperatur (erfaßt durch den Temperaturfühler 4) mittels der Elektronikeinrichtung 7 die elektrische Heizvorrichtung 6 eingeschaltet. Ein Ausschalten der elektrischen Heizvorrichtung 6 erfolgt, sobald die an dem Temperaturfühler 4 ermittelte Temperatur den vorgegebenen Grenzwert unterschreitet und zwar grundsätzlich unabhängig von der Höhe des an dem Drucksensor 5 anliegenden Druckes.

Bei einem innerhalb des Kraftstoffes unterhalb eines vorgegebenen Temperatur-Grenzwertes an dem Drucksensor 5 oberhalb des für diesen vorgegebenen Druck-Grenzwertes liegenden Druck wird davon ausgegangen, daß durch niedrige Temperaturen bedingte Kraftstoffausscheidungen vorliegen und dadurch eine temporäre Filterverstopfung bedingt ist. Von einer solchen Verstopfung wird dagegen bei einer Kraftstofftemperatur, die oberhalb des für den Temperaturfühler 4 vorgegebenen Temperatur-Grenzwertes liegt, nicht ausgegangen. Bei einer Überschreitung des vorgegebenen Druckgrenzwertes an dem Drucksensor 5 bei einer oberhalb der für den Temperaturfühler 4 vorgegebenen Grenztemperatur liegenden Kraftstofftemperatur wird vielmehr angenommen, daß der erhöhte Druck auf einer bleibenden Verschmutzung des Filters beruht, die beispielsweise auf einer nicht rechtzeitigen Vornahme eines vorgeschriebenen Filterwechsels beruhen kann. In einem sochen Fall, das heißt bei Überschreiten des vorgegebenen Druckgrenzwertes an dem Drucksensor 5 bei oberhalb des vorgegebenen Temperatur-Grenzwertes liegender Temperatur an dem Temperaturfühler 4 wird daher durch die Elektronikeinrichtung 7 ein Wartungssignal erzeugt.

Der Temperaturfühler 4 muß mit Bezug auf die Strömungsrichtung des Kraftstoffes stromauf der elektrischen Heizvorrichtung 6 liegen. Der Drucksensor 5 kann dagegen stromauf oder stromab der elektrischen Heizeinrichtung 6 angeordnet sein.

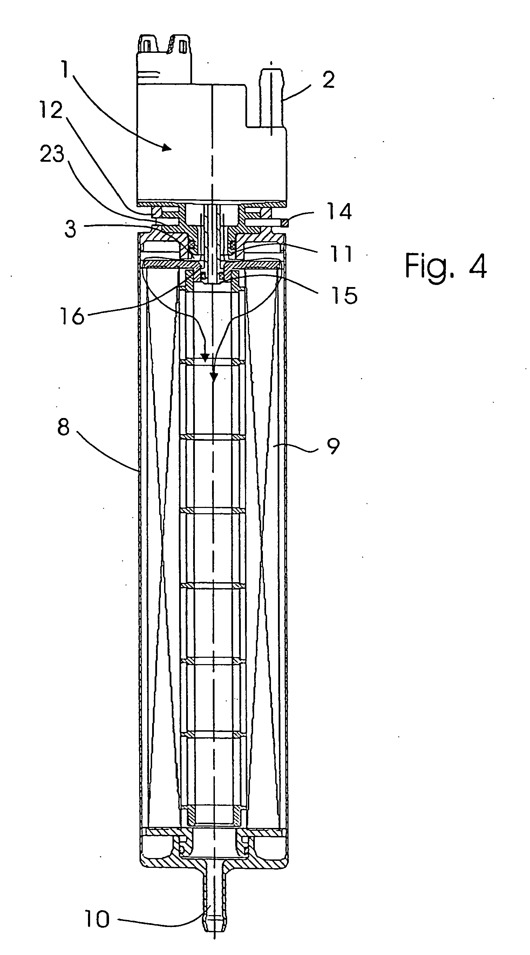

Eine Filtereinrichtung mit einer Heizvorrichtung, bei der die Heizvorrichtung nach dem in Fig. 1 dargestellten Schaltbild betrieben wird, ist in Fig. 4 dargestellt. Deren Aufbau und Funktion ist wie folgt.

In einem rohrförmigen Filtergehäuse 8 ist ein Filter in der Form eines Ringfilterelementes 9 gelagert. Das Filtergehäuse 8 weist an seinen Stirnseiten jeweils einen Zulaufstutzen 3 sowie einen Ablaufstutzen 10 auf. Durchströmt wird das Ringfilterelement 9 von radial außen nach radial innen. Die Durchströmung ist mit Strömungspfeilen angedeutet.

Über den Zulaufstutzen 3 ist das Filtergehäuse 8 mit einer Heizmodul-Einrichtung 1 für den in dem Filter zu filternden Dieselkraftstoff verbunden, in die der hierzu zu behandelnde Kraftstoff durch einen Zulaufstutzen 2 eingeführt wird.

Die Verbindung ist eine Steckverbindung, bei der ein von der Heizmodul-Einrichtung 1 abrägender Stutzen 11 radial gedichtet in den Stutzen 3 eingeschoben ist.

Die Steckverbindung ist über eine Lösesicherung gegen ein Lösen gesichert. Ausgebildet ist diese Lösesicherung in der Art, dass Ringrippen 12, 13 von der betreffenden Stirnseite des Filtergehäuses 8 bzw. von der Heizmodul-Einrichtung 1 radial ineinandergreifen und mittels eines radial eingeschobenen U-förmigen Federbügels 14 gegeneinander fixiert sind. Bei dieser Lösesicherung handelt es sich um eine Schnellverschlusssicherung, da der Federbügel 14 einfach auf- und abziehbar ist. Prinzipiell kann auch jede andere Art einer Schnellverschlusssicherung für die Steckverbindung eingesetzt werden.

Um in einer in der Heizmodul-Einrichtung 1 vorgesehenen Druckmessvorrichtung (zeichnerisch in dieser Figur nicht dargestellt) den Differenzdruck in dem Filtergehäuse 8 zwischen der Roh- und Reinseite des Ringfilterelementes 9 bestimmen zu können, ragt von der Heizeinrichtung 6 ausgehend ein Zentralstutzen 15 durch die Schnellverschlussmittel hindurch in den Reinraum des Ringfilterelementes 9. Um in den Reinraum des Ringfilterelementes 9 eindringen zu können, ist in der betreffenden Stirnseite des Ringfilterelementes 9 eine zentrale Öffnung 16 vorgesehen, in die der Zentralstutzen 15 radial dicht eingreift. Die Funktion der Heizeinrichtung einschließlich der Wartungssignalanzeige für das Filter erfolgen nach dem in Fig. 1 dargestellten Steuerverfahren.

Bei der vorstehend beschriebenen, mit einer Heizvorrichtung ausgerüsteten Filtereinrichtung wird auf folgenden Stand der Technik verwiesen.

Kraftstofffiltergehäuse mit einer integrierten Heizeinrichtung zeigen beispielsweise DE 44 30 471 A1 und DE 37 24 410 A1.

Ein mit einem Kraftstofffilter zusammenwirkendes Druckregelventil zeigt DE 196 01 760 A1. Bei jenem Kraftstofffilter handelt es sich um ein langgestrecktes, sogenanntes Leitungsfilter mit einem Zulauf an einer Stirnseite und einem Ablauf an der entgegengesetzten Stirnseite. Das Druckregelventil ist in eine der stirnseitigen Öffnungen des Filtergehäuses über eine Steckverbindung eingesteckt. Durch diese Bauart kann das dortige Kraftstofffilter in einer gleichen Ausführung wahlweise mit oder ohne ein in dieses eingestecktes Druckregelventil verwendet werden. Durch die Verwendung einer direkten Steckverbindung zwischen dem Druckregelventil und dem Filtergehäuse wird eine zusätzliche Verbindungsleitung zwischen Filtergehäuse und Druckregelventil eingespart.

Soweit die vorliegende Erfindung die Einrichtung nach Fig. 4 betrifft, beschäftigt sie sich mit dem Problem, ein Kraftstofffilter gleicher Konstruktion wahlweise mit und ohne eine Heizeinrichtung nach dem erfindungsgemäßen Steuerverfahren einsetzen zu können und für den Fall des Einsatzes einer. Heizeinrichtung diese möglichst einfach mit dem Kraftstofffilter verbinden zu können.

Bei der erfindungsgemäßen Ausgestaltung wird von der bei Druckregelventilen an sich bereits bekannten Art einer Verbindung mit einem Kraftstofffilter Gebrauch gemacht. Mit Bezug auf die vielfach bekannten anderen bisher praktizierten Lösungen bei Heizeinrichtungen bedurfte es von einem Fachmann nicht zu erwartender Überlegungen, um von der bisherigen Praxis abweichend ein bei der Anbringung von Druckregelventilen an Kraftstofffiltern bereits bekanntes Lösungsprinzip auf Filter mit Heizeinrichtungen zu übertragen.

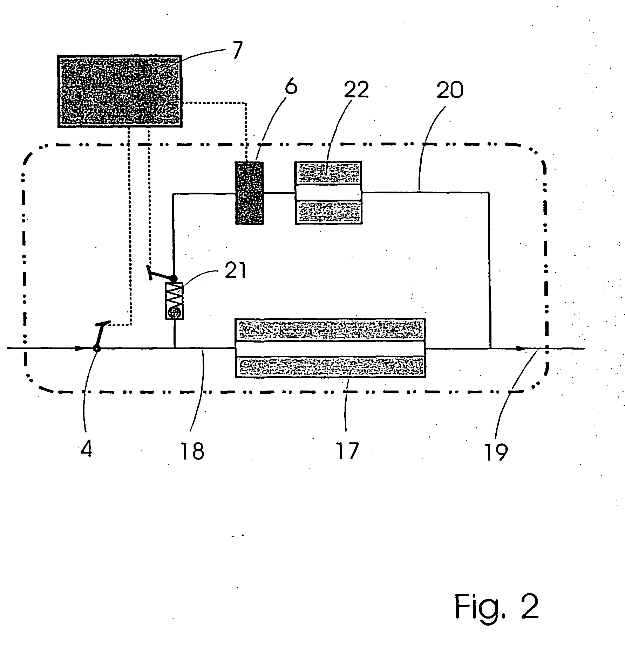

Fig. 2 zeigt eine Prinzipdarstellung einer Filtereinrichtung, bei der das Steuerverfahren zum Betreiben der Heizung und Anzeigen eines Filterverschmutzungs-Warnsignales bei einer Filtereinrichtung eingesetzt ist, die mit einem Haupt- und einem parallel geschalteten Zusatzfilter als Notfilter arbeitet.

Im Einzelnen ist die Einrichtung nach Fig. 2 wie folgt aufgebaut.

Ein Hauptfilter 17 wird von einem einem Kraftfahrzeug-. Verbrennungsmotor zuzuführenden Dieselkraftstoff durchströmt. Dabei wird der Kraftstoff dem Hauptfilter 17 durch eine Zuleitung 18 zugeführt und aus diesem durch eine Leitung 19 abgeführt.

Von der Zuleitung 18 zweigt eine das Hauptfilter 17 umgehende Umgehungsleitung 20 ab, die stromab des Hauptfilters 17 in die aus dem Hauptfilter 17 abführende Leitung 19 einmündet. Im Abzweigungsbereich der Zuleitung 18 ist in der Umgehungsleitung 20 ein Überdruckventil 21 eingebaut. Stromab des Überdruckventiles 21 sind in der Umgehungsleitung 20 in Strömungsrichtung hintereinander eine Heizvorrichtung 6 und ein Zusatzfilter 22 vorgesehen.

Stromauf der Abzweigung der Umgehungsleitung 20 aus der Zuleitung 18 befindet sich ein Temperaturfühler 4 zur Erfassung der Kraftstofftemperatur.

Der Temperaturfühler 4, das Überdruckventil 21 sowie die Heizvorrichtung 6 sind über elektrische Leitungen mit einer zentralen Elektronikeinri-chtung 7 als Steuereinrichtung verbunden, die gewöhnlich als ECU (Engine Controll Unit) bezeichnet wird. In der Elektronikeinrichtung 7 kann die Heizvorrichtung 6, bei der es sich üblicherweise um eine elektrische Heizung handelt, in Abhängigkeit der von dem Temperaturfühler 4 gemeldeten Kraftstofftemperatur sowie der Stellung des Überdruckventiles 21 gesteuert, das heißt ein- oder ausgeschaltet, werden.

Das Filtervolumen, insbesondere die Filterfläche des Zusatzfilters 22 ist im Vergleich zu dem Filtervolumen bzw. der Filterfläche des Hauptfilters 17 erheblich geringer. Auch besitzt das Filtermaterial des Zusatzfilters 22 einen gegenüber dem Hauptfilter 17 geringeren Abscheidegrad, der gerade noch ausreichend ist, um die Funktionsfähigkeit der Einspritzanlage des Verbrennungsmotors durch Kraftstoffverschmutzungen gerade noch nicht zu gefährden.

Die vorstehend beschriebene Einrichtung funktioniert wie folgt.

Besitzt der Dieselkraftstoff eine von dem Temperaturfühler 4 ermittelte Temperatur, die unterhalb eines vorgegebenen unteren Grenzwertes liegt, bei der temperaturbedingt Feststoffteilchen aus dem Kraftstoff in dem Hauptfilter 17 verstopfungsgefährdet ausfallen können und hat sich insoweit temperaturbedingt bereits stromauf des Hauptfilters ein Druck eingestellt, der zum Öffnen des Überdruckventiles 21 geführt hat, so schaltet die Elektronikeinrichtung 7 aufgrund der von dem Temperaturfühler 4 und dem Überdruckventil 21 erhaltenen Signale die Heizvorrichtung 7 zur Vorwärmung des die Umgehungsleitung 20 durchströmenden Kraftstoffes ein. Aufgrund des geringen Filtervolumens sowie gegebenenfalls des gegenüber dem Hauptfilter 17 geringeren Abscheidegrades in dem Zusatzfilter 22 ist das Zusatzfilter 22 nach Einschalten der Heizvorrichtung 7 relativ rasch in einem für eine befriedigende Motorfunktion ausreichenden Maße durchströmbar. Bei fortdauerndem Motorbetrieb erwärmt sich auch das Hauptfilter 17, wodurch dessen Durchflusswiderstand sinkt und zwar soweit, daß nach kurzer Zeit die an dem Überdruckventil 21 anstehenden Druckverhältnisse ein Schließen des Ventiles 21 bewirken. Gleichzeitig wird die elektrische Heizeinrichtung 7 abgeschaltet.

Entsteht bei an dem Temperaturfühler 4 herrschenden Temperaturen oberhalb des vorgegebenen Grenzwertes vor dem Hauptfilter 17 in den Kraftstoff ein das Überströmventil 21 öffnender Überdruck, so wird von einer laufzeitbedingten Verschmutzung des Hauptfilters 17 ausgegangen und ausgelöst durch die Elektronikeinrichtung 7 ein Wartungssignal erzeugt.

Der Vorteil der erfindungsgemäßen Ausführung besteht darin, daß Kraftstoff bei niedrigen Temperaturen erst und nur dann vorgewärmt wird, wenn ein sich in dem Hauptfilter 17 einstellender, zu hoher Druckverlust dies für einen einwandfreien Motorbetrieb erforderlich macht. Ferner kann mit einer relativ geringen Heizleistung bei einem bei niedrigen Temperaturen erfolgenden Motorstart die für einen einwandfreien Motorbetrieb erforderliche Mindestkraftstoffversorgung äußerst rasch erzielt werden. Dies ergibt sich daraus, daß bei dem Zusatzfilter 22 nur ein kleines Filtervolumen erwärmt werden muss und dass das Filtermaterial dieses Zusatzfilters 22 zusätzlich noch einen gegenüber dem Hauptfilter 17 kleineren Abscheidegrad besitzen kann, wodurch die Gefahr eines Zusetzens des Hauptfilters 17 durch Ablagerngen bereits grundsätzlich vermindert ist.

Bei niedrigen Kraftstofftemperaturen, d.h. solchen die unterhalb des an dem Temperaturfühler 4 vorgegebenen unteren Grenzwertes liegen, ist das Hauptfilter 17 in der Regel nicht vollständig verstopft, sondern der Durchflusswiderstand ist lediglich in einem für einen einwandfreiem Motorbetrieb unzulässig hohen Maße vergrößert. Dies bedeutet, daß auch bei geöffnetem Überdruckventil 21 Kraftstoff durch das Hauptfilter in geringem Maße hindurchströmt. Dadurch senkt sich der Durchflusswiderstand in dem Hauptfilter 17 bei laufendem Motorbetrieb allmählich auf den üblichen Betriebswert ab, bei dem das Überdruckventil 21 geschlossen ist. Dies ergibt sich daraus, daß den Einspritzventilen des Verbrennungsmotors jeweils Kraftstoff im Überschuß zugeführt wird, wobei der Überschuß sodann im Kreislauf gefördert wird. Dadurch gelangt bei laufendem Motorbetrieb bereits durch den Motor erwärmter Kraftstoff an das Hauptfilter 17. Zudem können Haupt- und Zusatzfilter 17 bzw. 22 auch räumlich in einem gemeinsamen Gehäuse derart untergebracht sein, daß die elektrische Heizvorrichtung 6 zwar in überwiegendem Maße den in das Zusatzfilter 22 eintretenden Kraftstoff erwärmt, aber zusätzlich auch über Wärmeleitung innerhalb des Filtergehäuses erwärmend auf den an und in dem Hauptfilter 17 anstehenden Kraftstoff einwirkt.

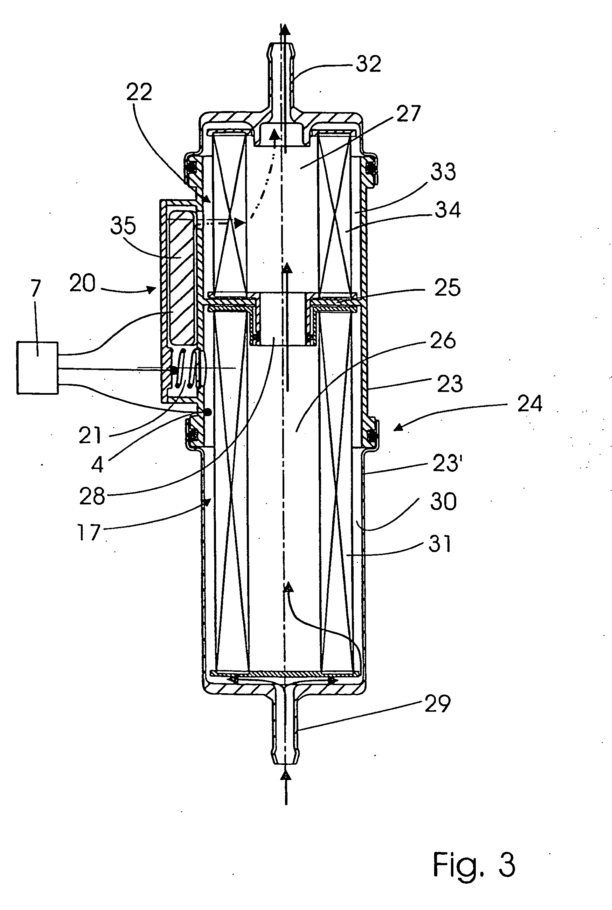

Fig. 3 zeigt eine konkrete erfindungsgemäße Ausführung zu der in Fig. 2 schematisch dargestellten Einrichtung. Bei dieser erfindungsgemäße Ausführung sind das Haupt- und Zusatzfilter 17 bzw. 22 in einem gemeinsamen aus Einzelteilen 23 und 23' Filtergehäuse 24 untergebracht. Zwischen den beiden Filtern 17, 22 befindet sich eine Trennwand 25. Über diese Trennwand 25 sind die Reinräume 26 bzw. 27 über eine Öffnung 28 miteinander verbunden.

Der Kraftstoff tritt durch eine Zuführleitung 29 in das Filtergehäuse 24 ein, und zwar in den Rohraum 30 des Hauptfilters 17. Entsprechend den eingetragen Strömungspfeilen strömt der Kraftstoff von dort durch den Ringfiltereinsatz 31 des Hauptfilters 17 in den Reinraum 26 es Filters. Von dort gelangt der Kraftstoff über die Öffnung 28 in der' Trennwand 25 in den Reinraum 27 des Zusatzfilters 22, von wo aus er das Filtergehäuse 24 über eine Abführleitung 32 verläßt.

In einem als Umgehungsleitung 20 fungierenden Verbindungsraum zwischen den Rohräumen 30 und 33 der Filter 17 und 22 ist ein Überdruckventil 21 angebracht, dessen Funktion derjenigen entspricht, die bei dem Funktionsprinzip nach Fig. 2 beschrieben ist. Bei geöffnetem Überdruckventil 21 strömt Kraftstoff aus dem Rohrraum 30 des Hauptfilters 17 in den Rohrraum 33 des Zusatzfilters 22 (angedeutet durch einen strichpunktierten Pfeil) und von dort durch den Ringfiltereinsatz 34 des Zusatzfilters 22 hindurch über dessen Reinraum 27 durch die Abführleitung 32 aus dem Filtergehäuse heraus. Der Heizvorrichtung 6 aus der Prinzipdarstellung entspricht in dem konkreten Ausführungsbeispiel ein PTC (Positive Temperature Coefficient)-Heizelement 35.

Der Temperaturfühler 4 ist in dem Rohraum 30 des Hauptfilters 17 stromauf des Überdruckventiles 21 angebracht. Wie in der Prinzipdarstellung nach Fig. 2 sind der Temperaturfühler 4, das Überdruckventil 21 sowie das Heizelement 35 mit einer Elektronikeinrichtung 7 verbunden, in die eingeleitet werden die Kraftstofftemperatur, die Stellung des Überdruckventiles 21 und von der aus in Abhängigkeit dieser vorgenannten Werte das elektrische Heizelement 35 ein oder ausgeschaltet wird.

Wird bei einer an den Temperaturfühler 4 gemessenen Kraftstofftemperatur, die unterhalb des vorgegebenen Temperaturgrenzwertes liegt, in der Elektronikeinrichtung 7 ein geöffnetes Überdruckventil 21 festgestellt, so wird die Heizvorrichtung 6 in der Form des PTC-Heizelementes 35 eingeschaltet. Dieses Heizelement 35 wird bei Schließen des Überdruckventiles 21 sodann wieder abgeschaltet.

Bei der vorbeschrieben erfindungsgemäßen Ausführung handelt es sich um ein in einem gemeinsamen Gehäuse 24 ausgebildetes Doppelfilter mit einem Haupt- und einem Zusatzfilter 17 bzw. 22, wobei je nach Temperatur lediglich das Hauptfilter 17 alleine oder gemeinsam mit dem Zusatzfilter 7 aktiv ist bzw. sind.

## Patentansprüche

1. Dieselkraftstoff-Filtereinrichtung eines Kraftfahrzeug-Verbrennungsmotors mit einem Filter (9, 17), einer Elektronikeinrichtung (7), einer Heizeinrichtung (6, 35) und einer ein Hauptfilter (17) umgehenden Umgehungsleitung (20), in der ein als Notfilter dienender Zusatzfilter (22) vorgesehen ist, wobei durch eine Zuordnung der Heizeinrichtung (6, 35) zu der Umgehungsleitung (20) eine von der Heizvorrichtung (6, 35) erzeugte Wärme zumindest zum überwiegenden Teil auf den Kraftstoffstrom in der Umgehungsleitung (20) einwirkt,
**dadurch gekennzeichnet,**
**dass** die Filtereinrichtung derart ausgebildet ist, dass
a) eingangsseitig des Filters (9, 17) festgestellte Druck- und Temperaturwerte in der Elektronikeinrichtung (7) zumindest eines der nachfolgenden beiden Signale generieren, zum
- Erzeugen einer Filterwartungsanzeige als Zeichen für eine unzulässige Verschmutzung des Filters (9, 17),
- Schalten der Heizvorrichtung (6),
b) die Filterwartungsanzeige ausschließlich bei einem Zustand des Dieselkraftstoffes eingangsseitig des Filters (9, 17) erzeugt ist, bei dem gleichzeitig die Kraftstofftemperatur und der Kraftstoffdruck oberhalb eines für beide Eigenschaften jeweils spezifisch vorgegebenen Grenzwertes liegen,
c) die Heizeinrichtung (6) ausschließlich bei einem Zustand des Dieselkraftstoffes eingangsseitig des Filters (9, 17) aktiv geschaltet ist, bei dem gleichzeitig die Kraftstofftemperatur unterhalb und der Kraftstoffdruck oberhalb eines jeweils spezifisch vorgegebenen Grenzwertes liegen, und
**dass** bei der Filtereinrichtung,
d) stromauf des Hauptfilters (17), ein den Durchfluss durch die Umgehungsleitung (20) steuerndes Überdruckventil (21) vorgesehen ist, das ausschließlich bei einem innerhalb des Dieselkraftstoffes eingangsseitig des Hauptfilters (17) oberhalb des definierten Grenzdruckes, geöffnet ist,
e) Haupt- und Zusatzfilter (17, 22) innerhalb eines gemeinsamen Filtergehäuses (24) liegen.

2. Filtereinrichtung nach Anspruch 1,
**dadurch gekennzeichnet,**
**dass** die Heizvorrichtung (6, 35) in der Umgehungsleitung (20) in einem Bereich zwischen dem Überdruckventil (21) und dem Zusatzfilter (22) Wärme auf den dort vorhandenen Kraftstoff überträgt.

3. Filtereinrichtung nach Anspruch 1 oder 2,
**dadurch gekennzeichnet,**
**dass** das Überdruckventil (21) als Drucksensor für den eingangsseitig des Filters zu bestimmenden Druck des Dieselkraftstoffes dient.

4. Filtereinrichtung nach einem der Ansprüche 1 bis 3,
**dadurch gekennzeichnet,**
**dass** das Zusatzfilter (22) eine Filterkapazität von etwa 15% bis 35% des Haupt-Filters (17) besitzt.

5. Filtereinrichtung nach einem der Ansprüche 1 bis 4,
**dadurch gekennzeichnet,**
**dass** das Filtermaterial des Zusatzfilters (22) einen gegenüber demjenigen des Hauptfilters (17) geringeren Abscheidegrad besitzt.

6. Filtereinrichtung nach einem der Ansprüche 1 bis 5,
**gekennzeichnet durch die Merkmale,**
- innerhalb des gemeinsamen Filtergehäuses (24) sind die beiden Filter (17, 22) **durch** eine Trennwand (25) voneinander getrennt,
- die Trennwand (25) enthält eine die Reinräume (26, 27) der beiden Filter (17, 22) miteinander verbindende Öffnung (28),
- eine Zuführleitung (29) des Filtergehäuses (24) führt in den Rohrraum (30) des Hauptfilters (17), während eine Abführleitung (32) dem Reinraum (27) des Zusatzfilters (22) zugeordnet ist,
- das Überdruckventil (21) steuert den Strömungsquerschnitt einer Verbindung zwischen den Rohrräumen (30, 33) der beiden Filter (17, 22),
- die Heizvorrichtung (6, 35) ist in einem Verbindungsraum zwischen den Rohräumen (30, 33) der Filter (17, 22) angeordnet.

7. Filtereinrichtung nach Anspruch 6,
**dadurch gekennzeichnet,**
**dass** die Heizvorrichtung (6, 35) ein direkt abstrahlender Wärmespender ist.

8. Filtereinrichtung nach Anspruch 7,
**dadurch gekennzeichnet,**
**dass** die Heizvorrichtung (6, 35) mindestens ein PTC (Positive Temperature Coeficient)-Element ist.

9. Filtereinrichtung nach einem der vorhergehenden Ansprüche, mit einer Heizmodul-Einrichtung mit
- einem lang gestreckten, zylindrischen Filtergehäuse,
- einem in diesem Filtergehäuse angeordneten, ringförmigen, radial durchströmten Ringfilterelement,
- einer Zu- und einer Ablauföffnung an den gegenüberliegenden Stirnseiten des Filtergehäuses,
**dadurch gekennzeichnet,**
**dass** die Heizmodul-Einrichtung (1) über eine an der Zulaufstirnseite des Ringfilterelementes (9) lösbar vorgesehene, von dem gesamten zuzuführenden Kraftstoff durchströmte Steckverbindung (3, 11) mit dem Filtergehäuse (8) verbunden ist.

10. Filtereinrichtung nach Anspruch 9,
**dadurch gekennzeichnet,**
**dass** die Steckverbindung durch Schnellverschlussmittel (12, 13; 14) gegen Lösen gesichert ist.

11. Filtereinrichtung nach Anspruch 10,
**dadurch gekennzeichnet,**
**dass** die Schnellverschlussmittel (12, 13; 14) einen in radial ineinander greifende Schlitze der Anschlussbereiche des Filtergehäuses (8) und der Heizvorrichtung (6) eingreifenden, U-förmigen Federbügel (14) umfassen.

12. Filtereinrichtung nach einem der Ansprüche 9 bis 11,
**gekennzeichnet durch die Merkmale,**
- die Heizmodul-Einrichtung (1) besitzt einen, die Kraftstoff führende Steckverbindung (3, 11) zentral durchgreifenden Zentralstutzen (15),
- die dem Stutzen (3) zugeordnete Stirnseite des Ringfilterelementes (9) besitzt eine den Zentralstutzen (15) aufnehmende Öffnung (16),
- der Zentralstutzen (15) ist über einen dichten Schiebesitz in die Stirnseite des Ringfilterelementes (9) einschiebbar.

## Claims

1. A Diesel-fuel filter device of an internal combustion engine of a motor vehicle, having a filter (9, 17), an electronic unit (7), a heating device (6, 35), and a bypass line (20) bypassing a main filter (17), an auxiliary filter (22) is provided in said line as an emergency filter, wherein by means of an association of the heating device (6, 35) with the bypass line (20), heat generated by the heating device (6, 35) affects the majority of the fuel flow in the bypass line (20),
**characterised in that**
the filter device is configured in such a manner that
a) pressure and temperature values determined on the entry side of the filter (9, 17) in the electronic unit (7) generate at least one of the two subsequent signals to
- generate a filter maintenance indication as a sign of an impermissible fouling of the filter (9, 17)
- switch the heating device (6),
b) the filter maintenance indication is generated exclusively in a state of the Diesel fuel on the entry side of the filter (9, 17) in which the fuel temperature and the fuel pressure exceed at the same time specifically pre-determined limit values for both of the qualities respectively,
c) the heating device (6) is actively switched exclusively in a state of the Diesel fuel on the entry side of the filter (9, 17) in which the at the same time fuel temperature is below and the fuel pressure exceeds specifically pre-determined limit values respectively, and
that in the filter device
d) a pressure relief valve (21) that controls the flow rate through the bypass line (20) is provided upstream from the main filter (17), said valve being opened exclusively when a pressure that is within the Diesel fuel on the entry side of the main filter (17) exceeds the defined pressure limit,
e) main and auxiliary filters (17, 22) are situated within a shared filter housing (24).

2. The filter device as specified in claim 1,
**characterised in that**
the heating device (6, 35) transfers heat in the bypass line (20) in a region between the pressure relief valve (21) and the auxiliary filter (22) to the fuel present there.

3. The filter device as specified in claim 1 or claim 2,
**characterised in that**
the pressure relief valve (21) serves as a pressure sensor for the pressure of the Diesel fuel to be determined at the entry side of the filter.

4. The filter device as specified in any one of claims 1 to 3,
**characterised in that**
the auxiliary filter (22) has a filter capacity of approximately 15% to 35% of the main filter (17).

5. The filter device as specified in any one of claims 1 to 4,
**characterised in that**
the filter material of the auxiliary filter (22) has a lesser degree of filtration than that of the main filter (17).

6. The filter device as specified in any one of claims 1 to 5,
**characterised by** the features that
- both of the filters (17, 22) are separated from one another within the shared filter housing (24) by a partition wall (25)
- the partition wall (25) contains an opening (28) that connects the clean chambers (26, 27) to the both of the filters (17, 22),
- a supply line (29) of the filter housing (24) leads into the dirty chamber (30) of the main filter (17), while a discharge line (32) is associated with the clean chamber (27) of the auxiliary filter (22),
- the pressure relief valve (21) controls the flow cross-section of a connection between the dirty chambers (30, 33) of both of the filters (17, 22),
- the heating unit (6, 35) is arranged in a connecting chamber between the dirty chambers (30, 33) of the filters (17, 22).

7. The filter device as specified in claim 6,
**characterised in that**
the heating device (6, 35) is a direct, radiating source of heat.

8. The filter device as specified in claim 7,
**characterised in that**
the heating device (6, 35) is at least a PTC (positive temperature coefficient) element.

9. The filter device as specified in any one of the preceding claims, having a heating module device with
- an elongated, cylindrical filter housing
- an annular ring filter element that is arranged in this filter housing and is flowed through radially,
- both a supply and a discharge opening on the opposite front faces of the filter housing,
**characterised in that**
the heating module device (1) is connected to the filter housing (8) by a plug connector (3, 11) that is detachably provided on the supply front face of the ring filter element (9) and is flowed through by all of the fuel to be supplied.

10. The filter device as specified in claim 9,
**characterised in that**
the plug connection is ensured against becoming detached by quick-connect coupling means (12, 13; 14).

11. The filter device as specified in claim 10,
**characterised in that**
the quick-connect coupling means (12, 13; 14) comprise slits, which radially engage with one another, of the connection regions of the filter housing (8) as well as the U-shaped spring clamps (14) engaging the heating device (6).

12. The filter device as specified in any one of the claims 9 to 11,
**characterised by** the features that
- the heating module device (1) has a central fitting (15) that centrally engages the fuel-conducting plug connection (3, 11),
- the front face of the ring filter element (9) associated with the fitting (3) has an opening (16) receiving the central fitting (15),
- the central fitting (15) can be inserted into the front face of the ring filter element (9) by means of a sealed sliding seat.

## Revendications

1. Dispositif de filtrage de carburant diesel d'un moteur à combustion interne d'un véhicule automobile comportant un filtre (9, 17), un dispositif électronique (7), un dispositif de chauffage (6, 35) et une conduite de dérivation (20) contournant un filtre principal (17), dans lequel un filtre supplémentaire (22) servant de filtre d'urgence est prévu, moyennant quoi du fait d'une coordination du dispositif de chauffage (6, 35) à la conduite de dérivation (20) une chaleur générée par le dispositif de chauffage (6, 35) agit au moins dans une proportion prépondérante sur le courant de carburant dans la conduite de dérivation (20), **caractérisé en ce que**
le dispositif de filtrage est configuré de telle sorte que
a) les valeurs de température et de pression constatées du côté d'entrée du filtre (9, 17) génèrent dans le dispositif électronique (7) au moins un des deux signaux suivants, afin de
- produire une annonce de maintenance de filtre comme signe d'un encrassement non tolérable du filtre (9, 17),
- mettre en service le dispositif de chauffage (6),
b) l'annonce de maintenance de filtre est exclusivement produit du côté d'entre du filtre (9, 17) dans un état du carburant diesel, dans lequel simultanément la température de carburant et la pression de carburant se situent au dessus d'une valeur limite respectivement spécifique prescrite pour les deux propriétés,
c) le dispositif de chauffage (6) est mis en service actif dans un état du carburant diesel du côté d'entrée du filtre (9, 17), dans lequel simultanément la température de carburant se situe en dessous et la pression de carburant se situe au dessus d'une valeur limite respectivement spécifique prescrite, et
**en ce que** sur le dispositif de filtrage
d) en amont du filtre principal (17), une soupape de surpression (21) commandant le débit à travers la conduite de dérivation (20) est prévue, laquelle est ouverte exclusivement en présence d'une pression au dessus d'une pression limite définie à l'intérieur du carburant diesel du côté d'entrée du filtre principal (17),
e) un filtre principal et un filtre supplémentaire (17, 22) sont présents à l'intérieur d'un logement de filtre (24) commun.

2. Dispositif de filtrage selon la revendication 1,
**caractérisé en ce que**
le dispositif de chauffage (6, 35) dans la conduite de dérivation (20) transmet dans une zone entre la soupape de surpression (21) et le filtre supplémentaire (22) de la chaleur au carburant présent à cet endroit.

3. Dispositif de filtrage selon la revendication 1 ou 2,
**caractérisé en ce que**
la soupape de surpression (21) sert de capteur de pression de la pression du carburant diesel à déterminé du côté d'entrée du filtre.

4. Dispositif de filtrage selon une des revendications 1 à 3,
**caractérisé en ce que**
le filtre supplémentaire (22) possède une capacité de filtrage d'environ 15% à 35% du filtre principal (17).

5. Dispositif de filtrage selon une des revendications 1 à 4,
**caractérisé en ce que**
le matériau de filtrage du filtre supplémentaire (22) possède un degré de piégeage moindre par rapport à celui-ci du filtre principal (17).

6. Dispositif de filtrage selon une des revendications 1 à 5,
**caractérisé par** les caractéristiques
- à l'intérieur du logement de filtre commun (24) les deux filtres (17, 22) sont séparés l'un de l'autre par une paroi de séparation (25),
- la paroi de séparation (25) contient une ouverture (28) reliant l'une à l'autre les chambres stériles (26, 27) des deux filtres (17, 22),
- une conduite d'amenée (29) du logement de filtre (24) mène dans la chambre tubulaire (30) du filtre principal (17), alors qu'une conduite d'évacuation (32) est coordonnée à la chambre stérile (27) du filtre supplémentaire (22),
- la soupape de surpression (21) commande le section transversale d'écoulement d'une liaison entre les chambres tubulaires (30, 33) des deux filtres (17, 22),
- le dispositif de chauffage (6, 35) est disposé dans une chambre de liaison entre les chambres tubulaires (30, 33) du filtre (17, 22).

7. Dispositif de filtrage selon la revendication 6,
**caractérisé en ce que**
le dispositif de chauffage (6, 35) est un dispensateur de chaleur à rayonnement direct.

8. Dispositif de filtrage selon la revendication 7,
**caractérisé en ce que**
le dispositif de chauffage (6, 35) est au moins un élément TPC (Positive Temperature Coefficient, à coefficient de température positif).

9. Dispositif de filtrage selon une des revendications précédentes, comportant un dispositif de module chauffant avec
- un logement de filtre cylindrique, allongé,
- un élément de filtre annulaire, traversé radialement, disposé dans ce logement de filtre,
- une ouverture d'amenée et d'évacuation sur les côtés frontaux opposés du logement de filtre,
**caractérisé en ce que**
le dispositif de module chauffant (1) est relié au logement de filtre (8) par l'intermédiaire d'une liaison par enfichage (3, 11) prévue de manière amovible sur le côté frontal d'amenée de l'élément de filtre annulaire (9), traversé par la totalité du carburant à introduire.

10. Dispositif de filtrage selon la revendication 9,
**caractérisé en ce que**
la liaison par enfichage est protégée contre un desserrage par un moyen de fermeture rapide (12, 13 ; 14).

11. Dispositif de filtrage selon la revendication 10,
**caractérisé en ce que**
le moyen de fermeture rapide (12, 13 ; 14) comprend une fente s'engageant radialement à l'intérieur des zones de raccordement du logement de filtre (8) et un étrier de ressort (14) en forme de U, venant en prise avec le dispositif de chauffage (6).

12. Dispositif de filtrage selon une des revendications 9 à 11,
**caractérisé par** les caractéristiques
- le dispositif de module chauffant (1) possède un embout central (15) s'engageant au centre à travers la liaison par enfichage (3, 11) introduisant le carburant,
- le côté frontal de l'élément de filtre annulaire (9) coordonné à l'embout (3) possède une ouvert (16) renfermant l'embout central (15),
- l'embout central (15) peut être coulissé à l'intérieur du côté frontal de l'élément de filtre annulaire (9) par l'intermédiaire d'une assise coulissante étanche.
